# EUROPÄISCHE PATENTANMELDUNG

(11) **EP 3 777 502 A1**
(43) Veröffentlichungstag der Anmeldung: **17.02.2021**
(21) Anmeldenummer: 20401045.8
(22) Anmeldetag: 05.08.2020
(51) Int. Cl.: A01C 7/04

(54) **EINZELKORNSÄMASCHINE MIT VEREINZELUNGSVORRICHTUNG**

(30) Priorität: 14.08.2019 DE 102019121879
(71) Anmelder: Amazonen-Werke H. Dreyer GmbH & Co. KG, 49205 Hasbergen (DE)
(72) Erfinder: Bulmahn, Simon, 26655 Westerstede (DE)

(57) **Zusammenfassung**

Einzelkornsämaschine mit einer Vereinzelungsvorrichtung (5) zur Vereinzelung von Saatgut, wobei die Vereinzelungsvorrichtung (5) in einem Vereinzelungsgehäuse (6) angeordnet ist und ein mittels eines Antriebselementes rotierend angetriebenes Vereinzelungselement (7) aufweist, welches den Innenraum des Gehäuses (6) der Vereinzelungsvorrichtung unterteilt, wobei mittels eines Gebläses eine Druckdifferenz erzeugbar ist. Das Vereinzelungselement (7) weist entlang seinem äußeren Umfangsbereich in regelmäßigem Abstand geeignete Aussparungen (11) zur Mitnahme einzelner Körner auf. Die Aussparungen schaffen Verbindungen zwischen einem ersten und einem zweiten Bereich des Gehäuses. Die Körner lagern sich aufgrund der Druckdifferenz an diesen Aussparungen (11) an und die Vereinzelungsvorrichtung weist an geeigneter Stelle ein Abdeckelement (12) auf, welches zum Unterbinden der Druckdifferenz die Aussparung zeitweise abdeckt. Das Vereinzelungselement (7) weist im Bereich der Aussparungen eine geringere Dicke (t) als im übrigen Bereich auf. Das Vereinzelungselement ist auf seiner Seite, an der sich die zu vereinzelnden Körner anlagern, in dem Bereich der sich anlagernden vereinzelten Körner ebenflächig und auf seiner dem Anlagerungsbereich der Körner abgewandten Seite zur Schaffung der geringeren Dicke (t) des Vereinzelungselementes (7) im Bereich (19) der Aussparung (11) vertieft ausgebildet.

## Beschreibung

Die Erfindung betrifft eine Einzelkornsämaschine gemäß dem Oberbegriff des Patentanspruches 1.

Eine derartige Einzelkornsämaschine ist in EP 3 266 295 A1 beschrieben. Die Einzelkornsämaschine weist mit einer Vereinzelungsvorrichtung zur Vereinzelung körniger Güter, vorzugsweise zur Vereinzelung von Saatgut. Die Vereinzelungsvorrichtung ist in einem Vereinzelungsgehäuse angeordnet und weist zumindest ein mittels eines Antriebselementes rotierend angetriebenes Vereinzelungselement auf, welches den Innenraum des Gehäuses der Vereinzelungsvorrichtung unterteilt. Mittels eines Gebläses ist eine Druckdifferenz zwischen einem ersten Bereich und einen zweiten Bereich in dem Vereinzelungsgehäuse erzeugbar. Das Vereinzelungselement weist entlang seiner Umfangsrichtung und/oder in seinem äußeren Bereich in der Nähe der Umfangslinie in regelmäßigem Abstand geeignete Aussparungen zur Mitnahme einzelner Körner des körnigen Gutes auf. Die Aussparungen schaffen räumliche Verbindungen zwischen dem ersten und dem zweiten Bereich des Gehäuses, so dass sich die Körner aufgrund der Druckdifferenz an diesen Aussparungen anlagern und die Vereinzelungsvorrichtung ferner an geeigneter Stelle zumindest ein Abdeckelement auf. Zum Unterbinden der Druckdifferenz und somit einer fortdauernden Anlagerung der transportierten Körner die Aussparung zeitweise abdeckt. Das Vereinzelungselement weist jeweils im Bereich der Aussparungen eine geringere Dicke als im übrigen Bereich auf.

Die verdünnten Aussparungen des Vereinzelungselementes sind in dem metallenen Vereinzelungsbereich angeordnet. Hierdurch wird eine sehr dünne Ausführung der metallenen Vereinzelungsbahn möglich. Dieser Aufwand mit der sehr dünnen Ausführung des metallenen Vereinzelungsbahn erfordert jedoch einen sehr hohen Fertigungsaufwand.

Der Erfindung liegt die Aufgabe zu Grunde, einen möglichst geringen Fertigungsaufwand zur Schaffung derartiger Vereinzelungsscheiben vorzusehen.

Dieser Aufwand lässt sich dadurch verringern, dass das Vereinzelungselement auf seiner Seite, an denen sich die zu vereinzelnden Körner anlagern, zumindest in dem Bereich der sich anlagernden vereinzelten Körner ebenflächig und auf seiner dem Anlagerungsbereich der Körner abgewandten Seite des Vereinzelungselementes zur Schaffung der geringeren Dicke des Vereinzelungselementes im Bereich der Aussparung vertieft ausgebildet ist.

Hierdurch wird es ermöglicht, dass insbesondere bei der Ausbringung von Raps, die Vereinzelungsscheibe entsprechend ausgestaltet werden kann.

Hierbei kann der vertiefte Bereich auf seiner dem Anlagerungsbereich der Körner abgewandten Seite des Vereinzelungselementes zur Schaffung der geringeren Dicke des Vereinzelungselementes im Bereich der Aussparung vertieft ausgebildet ist. Dieses ist dadurch einfach zu verwirklichen, dass der vertiefte Bereich des Vereinzelungselementes im Bereich der Aussparung als umlaufende Ringnut und/oder -rille ausgebildet ist.

In vorteilhafterweise ist hierbei vorgesehen, dass das Vereinzelungselement im Bereich der Aussparungen eine Dicke von kleiner als 1,5 mm, vorzugsweise kleiner/gleich 1 mm aufweist, dass die Aussparungen einen Durchmesser von kleiner als 1,5 mm aufweisen. Dieses ist besonders bei Raps vorteilhaft.

Damit die Körner von dem Auswerferelementen vorteilhaft aus die Aussparung herausgedrückt werden können, ist vorgesehen, dass dem Vereinzelungselement zumindest ein entlang dessen Körner vorher Seite laufendes, rollenartig ausgebildetes Auswerferelement zugeordnet ist, dass das Auswerferelement sternförmig entlang seiner Umfangslinie zum Eingriff in die Aussparung geeignete Dornen aufweist.

Damit die Körner auf der Seite, auf welcher sich die Körner anlagern, aufgerührt werden und sich somit besser anlagern können, ist vorgesehen, dass das Vereinzelungselement auf seiner Seite, an denen sich die zu vereinzelnden Körner anlagern, zumindest in dem Bereich der sich anlagernden vereinzelten Körner ebenflächig und nicht aus der ebenflächige Oberweite herausragend angeordnet ist, sondern um die ebenflächige eine vertiefende Fläche angeordnet ist, die jedoch die trennende Fläche nicht durchtrennt, auf.

Weitere Einzelheiten der Erfindung sind der Beispielsbeschreibung und den Zeichnungen zu entnehmen. Die Zeichnungen zeigen
- Fig.1: eine Säaggregat einer Einzelkornsämaschine in Explosionsansicht von schräg vorn,
- Fig.2: eine Vereinzelungsvorrichtung in Explosionsansicht von schräg hinten in einem anderen Maßstab,
- Fig.3: eine geöffnete Vereinzelungsvorrichtung in perspektivischer Ansicht von schräg hinten in einem anderen Maßstab,
- Fig.4: das Abdeckelement und das Auswerferelement in ausschnittsweise Darstellung gemäß Fig.3 in vergrößerter Darstellung,
- Fig.5: die der Vereinzelungsseite abgewandte Seite des scheibenförmigen Vereinzelungselementes in Seitenansicht in einem anderen Maßstab,
- Fig.6: die der Vereinzelungsseite abgewandte Seite des scheibenförmigen Vereinzelungselementes gemäß Fig.5 in perspektivischer Ansicht in einem anderen Maßstab,
- Fig.7: die Vereinzelungsscheibe gemäß den Fig. 5 und 6 im Schnitt VII - VII in einem anderen Maßstab,
- Fig.8: einen Ausschnitt der Vereinzelungsscheibe gemäß Fig.7 im Bereich einer Aussparung im vergrößerten Maßstab,
- Fig.9: die Vereinzelungsseite des scheibenförmigen Vereinzelungselementes in Seitenansicht in dem Maßstab gemäß Fig.5,
- Fig.10: die Vereinzelungsseite des scheibenförmigen Vereinzelungselementes gemäß Fig.9 in perspektivischer Ansicht in dem Maßstab gemäß Fig.6,
- Fig.11: die Vereinzelungsseite eines weiteren scheibenförmigen Vereinzelungselementes in Seitenansicht in einem anderen Maßstab,
- Fig.12: die Vereinzelungsseite des weiteren scheibenförmigen Vereinzelungselementes gemäß Fig.11 in perspektivischer Ansicht in einem anderen Maßstab,
- Fig.13: die Vereinzelungsscheibe gemäß den Fig. 11 und 12 im Schnitt XIII - XIII in einem anderen Maßstab,
- Fig.14: einen Ausschnitt der Vereinzelungsscheibe gemäß Fig.13 im Bereich einer Aussparung im vergrößerten Maßstab und
- Fig.15: einen Ausschnitt der Vereinzelungsscheibe gemäß Fig.12 in vergrößerter Darstellung.

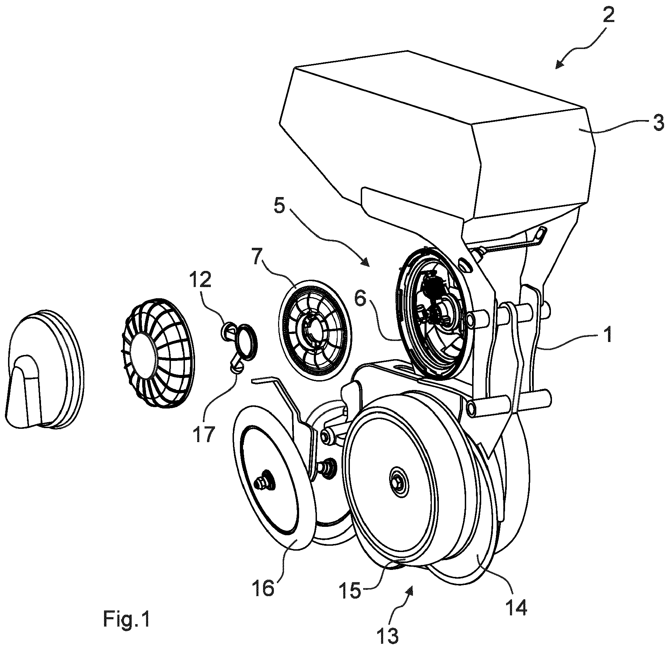

Eine landwirtschaftliche Einzelkornsämaschine weist typischerweise einen horizontal quer zur Fahrtrichtung ausgerichteten Rahmen auf. Mittels Tragelementen 1 sind an dem nicht dargestellten Rahmen mehrere Säaggregate 2 befestigt, wie sie Fig. 1 zeigt.

Ein Säaggregat 2 weist einen Vorratsbehälter 3 zur Bevorratung von zu auszubringendem Saatgut auf. Der untere Bereich des Vorratsbehälters 3 ist als Auslaufbereich ausgestaltet, in welchem eine Auslauföffnung 4 angeordnet ist. Über die Auslauföffnung 4 wird das auszubringende Saatgut an eine Vereinzelungsvorrichtung 5 abgegeben, welche unterhalb des Vorratsbehälters 3 angeordnet ist.

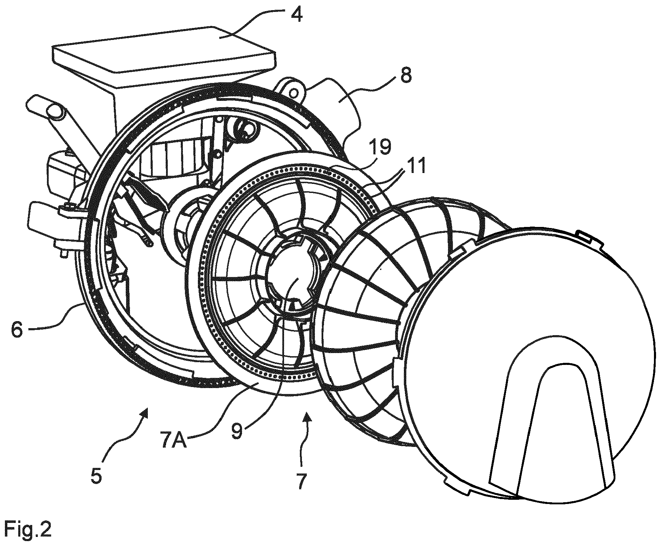

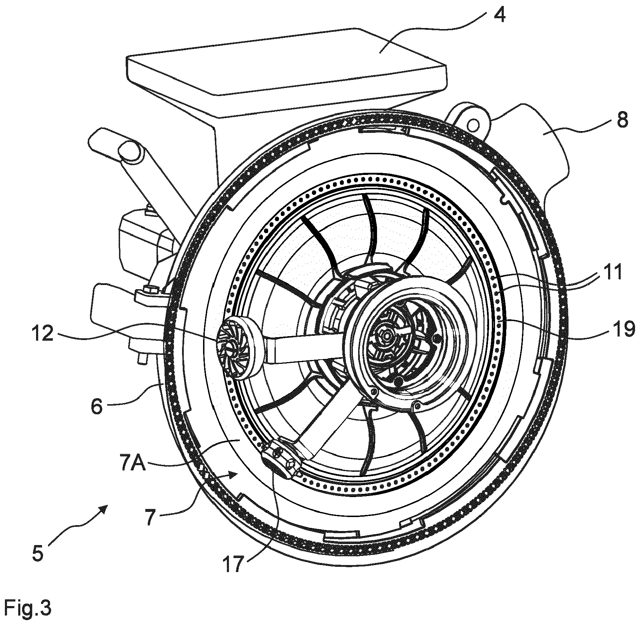

Die Vereinzelungsvorrichtung 5, gezeigt in den Fig. 2 und 3, besteht aus einem Gehäuse 6. Das Gehäuse 6 wird von einem Vereinzelungselement 7 derart in einen ersten und einen zweiten Bereich unterteilt, dass zwischen beiden Gehäusebereichen eine Druckdifferenz erzeugbar ist. Das Vereinzelungselement 7 ist in seinem Zentrum drehfest mit einer Antriebswelle verbunden und rotiert während des Betriebs der Einzelkornsämaschine. Zum Erzeugen einer Druckdifferenz zwischen den beiden Bereichen des Gehäuses 6 wird einem Bereich des Gehäuses 6 mithilfe eines nicht dargestellten Gebläses über eine Druckluftleitung 8 Luft zugeführt oder entnommen.

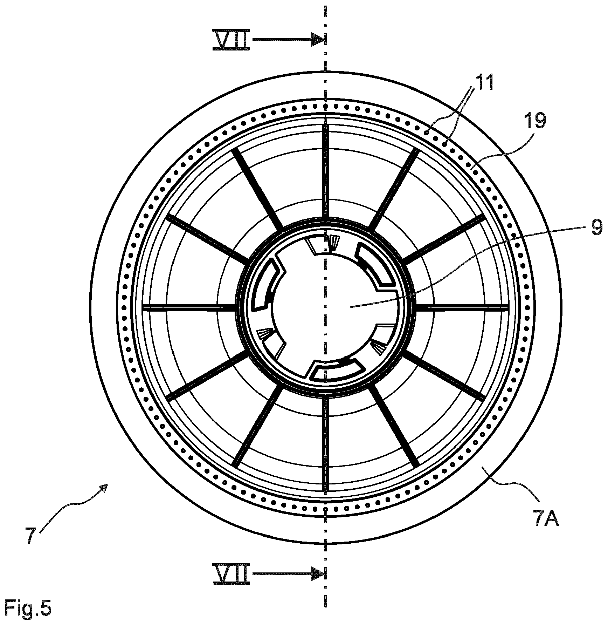

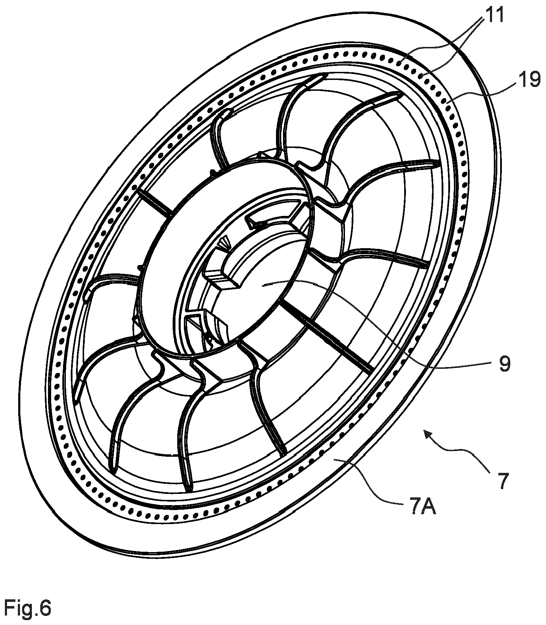

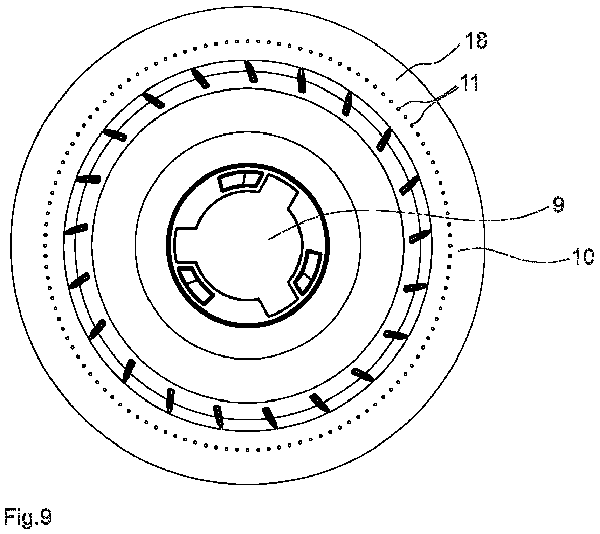

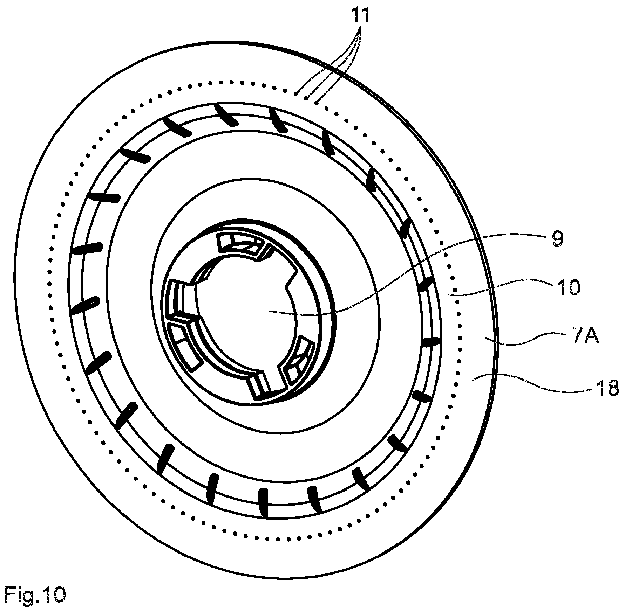

Zur Benutzung in dem Säaggregat der Fig. 1 bis 3 ist ein als Vereinzelungsscheibe 7A ausgebildetes Vereinzelungselement 7 vorgesehen, wie es Fig.5 bis 10 zeigt.

Die Vereinzelungsscheibe 7A der Fig.5 bis 10 weist einen inneren Befestigungsbereich 9 und einen äußeren Vereinzelungsbereich 10 auf. Die Vereinzelungsscheibe 7A ist aus Kunststoff gefertigt und derart gestaltet, dass die Vereinzelungsscheibe 7A in ihrem Zentrum drehfest mit einer Antriebswelle verbunden werden kann. Die Fertigung aus Kunststoff ist besonders kostengünstig und vielseitig, da Kunststoffformteile leicht in beliebigen Formen hergestellt werden können. Zudem ist Kunststoff im Vergleich zu Metall ein besonders leichter Werkstoff.

Der Vereinzelungsbereich 10 ist in der Nähe der Umfangslinie der Vereinzelungsscheibe 7A angeordnet. Der Vereinzelungsbereich 10 weist in regelmäßigen Abständen geeignete Aussparungen 11 zur Mitnahme einzelner Saatkörner auf. Die Aussparungen 11 sind als Durchbrüche durch die Vereinzelungsscheibe 7A ausgeführt, sodass sie jeweils eine räumliche Verbindung zwischen beiden Bereichen des Gehäuses 6 schaffen.

Eine räumliche Verbindung zwischen den beiden Bereichen des Gehäuses 6 ist nur über die Aussparungen 11 des Vereinzelungselements 7 gegeben. Über die Aussparungen 11 ist ein Luftaustausch zwischen beiden Bereichen des Gehäuses 6 möglich. Mithilfe der Druckdifferenz und/oder der aufgrund der Druckdifferenz durch die Aussparungen 11 entstehende Saugwirkung lagern sich einzelne Saatkörner an den Aussparungen 11 an und werden auf diese Weise von dem rotierenden Vereinzelungselement 7 transportiert.

Die transportierten Saatkörner werden an definierter Position freigegeben, in dem die mit einer Druckdifferenz beaufschlagten Aussparungen 11 durch das Abdeckelement 12 abdeckt werden und der Saatgutablageeinrichtung 13 zugeführt. Die Saatgutablageeinrichtung 13 umfasst als Scheibenschare ausgebildete Furchenöffnungselemente 14, Tiefenführungselemente 15 sowie Vorrichtungen 16 zum Schließen der Saatfurche.

Zum Freigeben der transportierten Saatkörner werden die Aussparungen 11 zum Unterbrechen der Druckdifferenz zwischen den beiden Bereichen des Gehäuses 6 durch das Abdeckelement 12 zeitweise abgedeckt. Dazu liegt ein rollenartig ausgebildetes Abdeckelement 12 auf der körnerfreien Seite, also auf der anderen Seite des Vereinzelungselement 7 gegenüber dem Vereinzelungsbereich 10 des Vereinzelungselements 7 an. Das Abdeckelement 12 rollt entlang des Vereinzelungsbereichs 10 über die Aussparungen 11, verschließt die Aussparungen 11 und überträgt einen Impuls auf die transportierten Körner, welcher die Körner aus den Aussparungen 11 heraus in Richtung der Saatgutablageeinrichtungen 13 beschleunigt.

Zum Reinigen verstopfter und/oder verschmutzter Aussparungen 11 ist zudem ein Auswerfelement 17 vorgesehen. Das Auswerfelement 17 ist sternförmig ausgebildet und weist Dornen 17A auf, die geeignet sind, formschlüssig von der körnerfreien Seite her in die Aussparungen 11 einzugreifen und dabei mechanisch die Inhalte der Aussparungen 11 herauszudrücken.

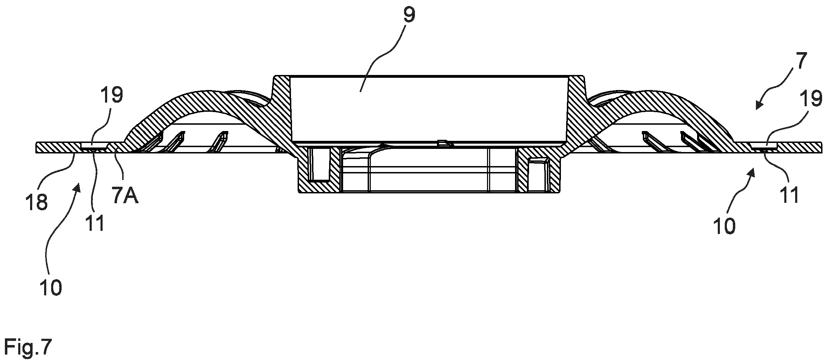

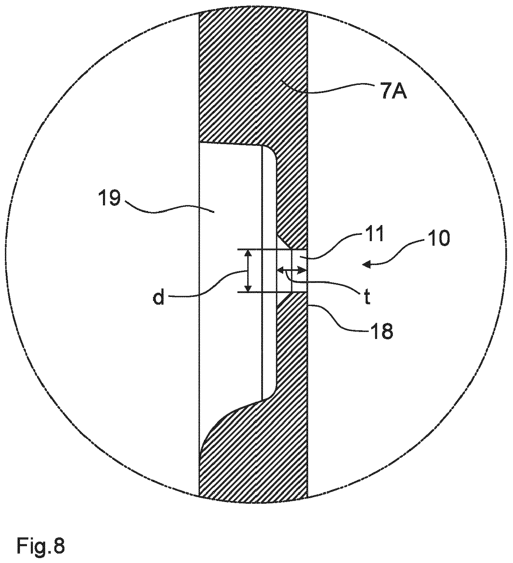

Das Vereinzelungselement 7 weist jeweils im Bereich der Aussparungen 11 eine geringere Dicke t als im übrigen Bereich auf, wie beispielsweise die Fig.7 und 8 zeigen. Das Vereinzelungselement 7 auf seiner Seite 18, an denen sich die zu vereinzelnden Körner anlagern, zumindest in dem Bereich der sich anlagernden vereinzelten Körner ebenflächig und auf seiner dem Anlagerungsbereich der Körner abgewandten Seite des Vereinzelungselementes 7 zur Schaffung der geringeren Dicke t des Vereinzelungselementes 7 im Bereich der Aussparung 11 eine ringförmige Vertiefung 19 weist. Der vertiefte Bereich 19 des Vereinzelungselementes 7 im Bereich der Aussparung 11 als umlaufende Ringnut und/oder -rille ausgebildet ist. Das Vereinzelungselement 7 weist im Bereich 19 der Aussparungen 11 eine Dicke t von kleiner als 1,5 mm, vorzugsweise kleiner/gleich 1 mm aufweist. Die Aussparungen 11 einen Durchmesser d von kleiner als 1,5 mm aufweisen.

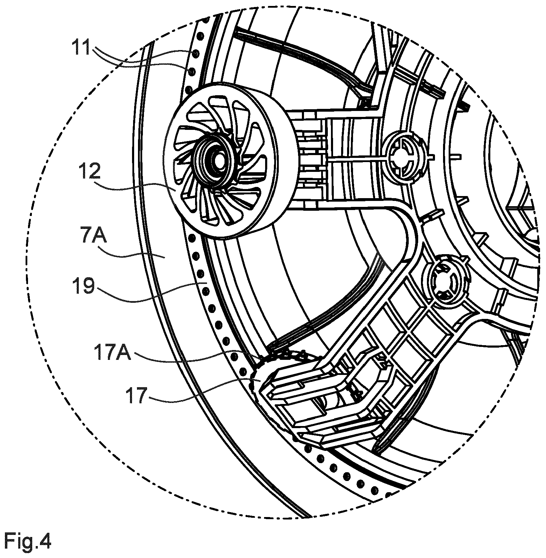

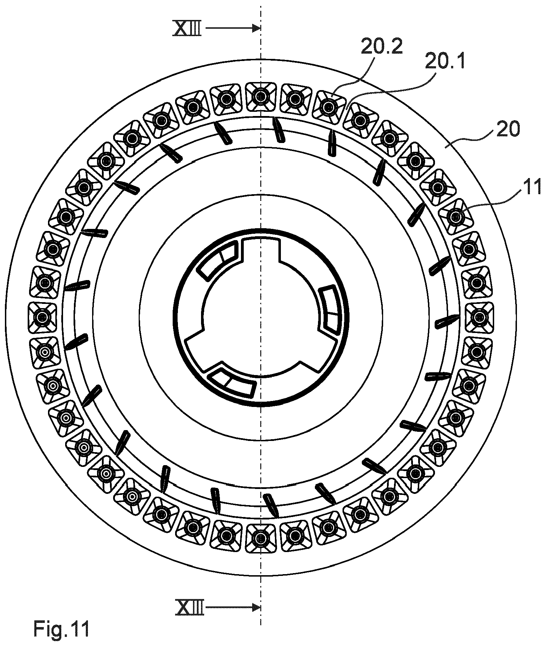

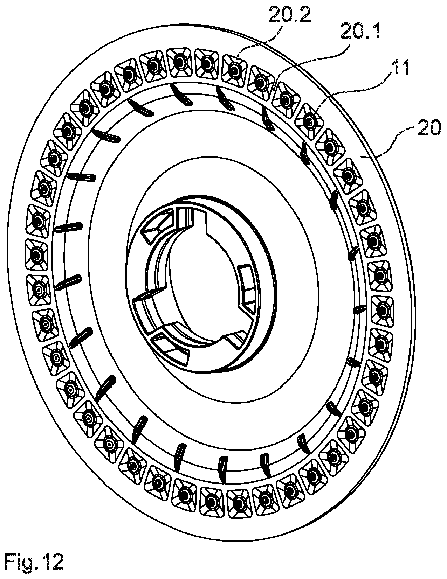

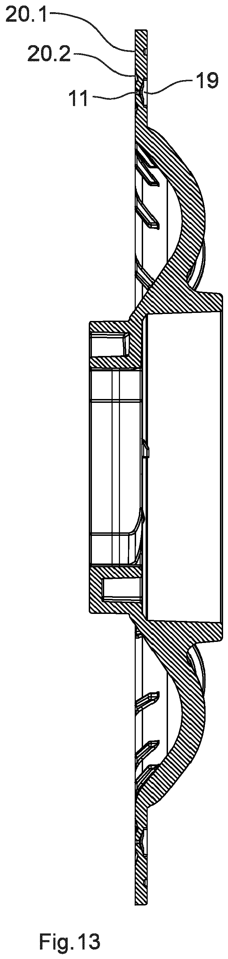

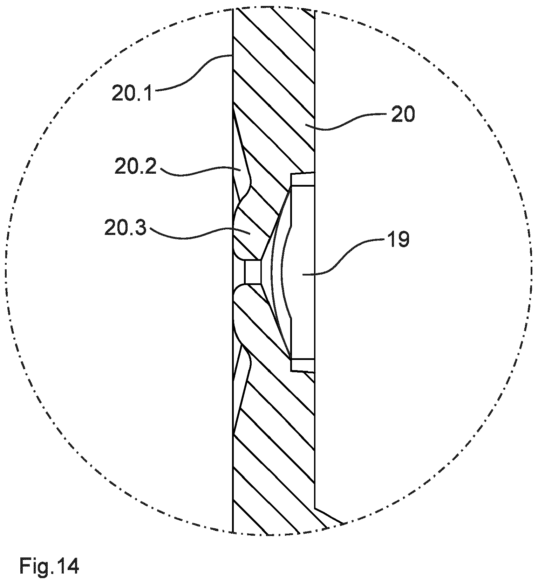

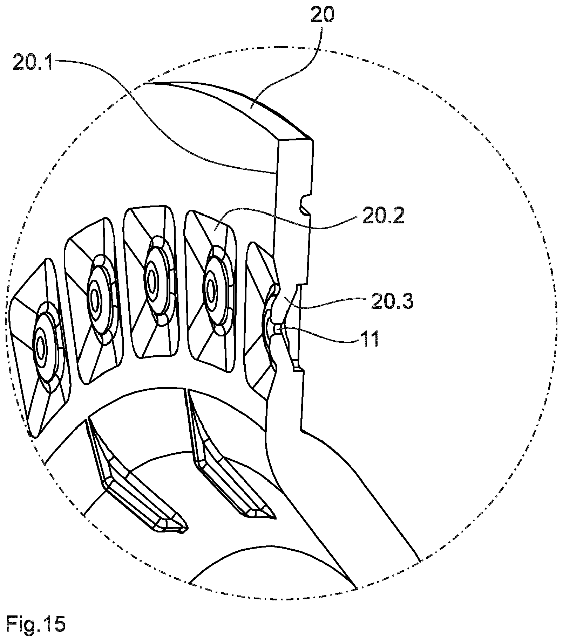

Das Vereinzelungselement 20 gemäß den Fig.11 bis 15 weist im Gegensatz zu dem vorbeschriebenen Vereinzelungselement 7 gemäß den Fig.2 bis 10 auf seiner Vereinzelungsseite 20.1, an denen sich die zu vereinzelnden Körner anlagern, zumindest in dem Bereich der sich anlagernden vereinzelten Körner ebenflächig und nicht aus der ebenflächige Oberseite herausragend, sondern um die ebenflächige eine vertiefende Fläche 20.2 , die jedoch die trennende Fläche 20.3 nicht durchtrennt, auf.

## Patentansprüche

1. Einzelkornsämaschine mit einer Vereinzelungsvorrichtung (5) zur Vereinzelung körniger Güter, vorzugsweise zur Vereinzelung von Saatgut, wobei die Vereinzelungsvorrichtung (5) in einem Vereinzelungsgehäuse (6) angeordnet ist und zumindest ein mittels eines Antriebselementes rotierend angetriebenes Vereinzelungselement (7, 20) aufweist, welches den Innenraum des Gehäuses (6) der Vereinzelungsvorrichtung (5) unterteilt, wobei mittels eines Gebläses eine Druckdifferenz zwischen einem ersten Bereich und einen zweiten Bereich in dem Vereinzelungsgehäuse (6) erzeugbar ist, wobei das Vereinzelungselement (7, 20) entlang seiner Umfangsrichtung und/oder in seinem äußeren Bereich in der Nähe der Umfangslinie in regelmäßigem Abstand geeignete Aussparungen (11) zur Mitnahme einzelner Körner des körnigen Gutes aufweist, wobei die Aussparungen (11) räumliche Verbindungen zwischen dem ersten und dem zweiten Bereich des Gehäuses (6) schaffen und sich die Körner aufgrund der Druckdifferenz an diesen Aussparungen (11) anlagern und die Vereinzelungsvorrichtung (5) ferner an geeigneter Stelle zumindest ein Abdeckelement (12) aufweist, welches zum Unterbinden der Druckdifferenz und somit einer fortdauernden Anlagerung der transportierten Körner die Aussparung (11) zeitweise abdeckt, wobei das Vereinzelungselement (7, 20) jeweils im Bereich der Aussparungen (11) eine geringere Dicke (t) als im übrigen Bereich aufweist, **dadurch gekennzeichnet, dass** das Vereinzelungselement (7) auf seiner Seite, an denen sich die zu vereinzelnden Körner anlagern, zumindest in dem Bereich der sich anlagernden vereinzelten Körner ebenflächig und auf seiner dem Anlagerungsbereich der Körner abgewandten Seite des Vereinzelungselementes (7, 20) zur Schaffung der geringeren Dicke (t) des Vereinzelungselementes (7, 20) im Bereich (19) der Aussparung (11) vertieft ausgebildet ist.

2. Einzelkornsämaschine nach Anspruch 1, **dadurch gekennzeichnet, dass** der vertiefte Bereich (19) des Vereinzelungselementes (7, 20) im Bereich der Aussparung (11) als umlaufende Ringnut und/oder -rille ausgebildet ist.

3. Einzelkornsämaschine nach Anspruch 1, **dadurch gekennzeichnet, dass** das Vereinzelungselement (7, 20) im Bereich der Aussparungen (11) eine Dicke (t) von kleiner als 1,5 mm, vorzugsweise kleiner/gleich 1 mm aufweist, dass die Aussparungen (11) einen Durchmesser (d) von kleiner als 1,5 mm aufweisen.

4. Einzelkornsämaschine nach zumindest einem der vorstehenden Ansprüche, **dadurch gekennzeichnet, dass** dem Vereinzelungselement (7, 20) zumindest ein entlang dessen Körner vorher Seite laufendes, rollenartig ausgebildetes Auswerferelement (13) zugeordnet ist, dass das Auswerferelement (13) sternförmig entlang seiner Umfangslinie zum Eingriff in die Aussparung geeignete Dornen (13 A) aufweist.

5. Einzelkornsämaschine nach Anspruch 1, **dadurch gekennzeichnet, dass** das Vereinzelungselement (20) auf seiner Seite, an denen sich die zu vereinzelnden Körner anlagern, zumindest in dem Bereich der sich anlagernden vereinzelten Körner ebenflächig und nicht aus der ebenflächige Oberseite herausragend angeordnet ist, sondern um die ebenflächige eine vertiefende Fläche (20.2) angeordnet ist, die jedoch die trennende Fläche (20.3) nicht durchtrennt, auf.
